# EUROPÄISCHE PATENTSCHRIFT

(11) **EP 1 005 476 B1**
(45) Veröffentlichungstag und Bekanntmachung des Hinweises auf die Patenterteilung: **16.01.2002**
(21) Anmeldenummer: 98946393.0
(22) Anmeldetag: 20.08.1998
(51) Int. Cl.: C07F 15/00, B01J 31/00, C08F 4/80, C08F 32/04

(54) **VERFAHREN ZUR HERSTELLUNG VON RUTHENIUMKOMPLEXEN**
METHOD FOR PRODUCING RUTHENIUM COMPLEXES
PROCEDE DE PRODUCTION DE COMPLEXES DE RUTHENIUM

(30) Priorität: 22.08.1997 DE 19736609; 13.01.1998 DE 19800934
(43) Veröffentlichungstag der Anmeldung: 07.06.2000
(73) Patentinhaber: BASF AKTIENGESELLSCHAFT, 67056 Ludwigshafen (DE)
(72) Erfinder: SCHWAB, Peter, D-67098 Bad Dürkheim (DE); SCHULZ, Michael, D-67067 Ludwigshafen (DE); WOLF, Justin, D-97990 Weikersheim (DE); STUER, Wolfram, D-97080 Würzburg (DE); WERNER, Helmut, D-97074 Würzburg (DE)
(74) Vertreter: Isenbruck, Günter, Dr.
(86) Internationale Anmeldenummer: EP9805303
(87) Internationale Veröffentlichungsnummer: WO9910356

(56) Entgegenhaltungen:
- WO-A1-97/06185
- YASUO WAKATSUKI et al. Some organometallic chemistry of ruthenium(II). Journal of Organometallic Chemistry, 1995, Band 500, Seiten 349- 361, insbesondere der ganze Artikel, XP002900313
- SCHWAB, P. et al. Synthesis and Applications of RuCl2(=CHR')(PR3)2: The In- fluence of the Alkylidene Moiety on Metathesis Activity, 1996, Band 118, Seiten 100-110, insbesondere der ganze Artikel, XP002900314

## Beschreibung

Die Erfindung betrifft Verfahren zur Herstellung von Rutheniumkomplexen, die beispielsweise als Katalysatoren in Metathesereaktionen eingesetzt werden können.

Bei der Olefinmetathese (Disproportionierung) findet in ihrer einfachsten Form eine reversible, metallkatalysierte Umalkylidenierung von Olefinen durch Bruch und Neuformierung von Kohlenstoff-Kohlenstoff-Doppelbindungen statt. Im Fall der Metathese acyclischer Olefine unterscheidet man beispielsweise zwischen einer Selbstmetathese, bei der ein Olefin in ein Gemisch zweier Olefine unterschiedlicher molarer Massen übergeht (beispielsweise Umsetzung von Propen zu Ethen und 2-Buten), und der Kreuz- oder Co-Metathese, die eine Umsetzung zweier unterschiedlicher Olefine beschreibt (beispielsweise von Propen mit 1-Buten zu Ethen und 2-Penten). Zu den weiteren Anwendungsgebieten der Olefinmetathese zählen Synthesen ungesättigter Polymere durch ringöffnende Metathesepolymerisation (ROMP) von cyclischen Olefinen und die acyclische Dien-Metathesepolymerisation (ADMET) von α,ω-Dienen. Neuere Anwendungen betreffen die selektive Ringöffnung von cyclischen Olefinen mit acyclischen Olefinen, sowie Ringschlußreaktionen (RCM), mit denen - vorzugsweise aus α, ω-Dienen - ungesättigte Ringe verschiedener Ringgröße hergestellt werden können.

Als Katalysatoren für Metathesereaktionen eignen sich prinzipiell homogen und heterogene Übergangsmetallverbindungen, insbesondere Rutheniumverbindungen.

Heterogene Katalysatoren, beispielsweise Molybdän-, Wolfram- oder Rheniumoxide auf anorganischen oxidischen Trägern, zeichnen sich bei Reaktionen von nichtfunktionalisierten Olefinen durch hohe Aktivität und Regenerierbarkeit aus, müssen allerdings beim Einsatz funktionalisierter Olefine, wie Methyloleat, zur Aktivitätssteigerung oft mit einem Alkylierungsmittel vorbehandelt werden. Olefine mit protischen funktionellen Gruppen (wie Hydroxylgruppen, Carboxylgruppen oder Aminogruppen) führen zur spontanen Desaktivierung des Heterogenkontaktes.

In den letzten Jahren wurden vermehrt Anstrengungen unternommen, in protischem Medium und an Luftsauerstoff stabile Homogenkatalysatoren herzustellen. Besonderes Interesse haben dabei spezielle Ruthenium-Alkylidenverbindungen gefunden. Derartige Komplexe und Verfahren zu ihrer Herstellung sind bekannt.

In der WO 93/20111 sind Ruthenium- und Osmiummetallcarbenkomplexe für die Olefinmetathesepolymerisation beschrieben. Die Komplexe weisen die Struktur RuX₂(=CH-CH=CR₂)L₂ auf. Als Liganden L kommen Triphenylphosphan und substituiertes Triphenylphosphan zum Einsatz. Die Herstellung erfolgt beispielsweise durch Umsetzung von RuCl₂(PPh₃)₃ mit geeigneten disubstituierten Cyclopropenen als Carben-Vorläufern. Die Synthese von Cyclopropen-Derivaten ist jedoch mehrstufig und wirtschaftlich wenig interessant.

Ähnliche Umsetzungen sind in WO 96/04289 beschrieben. Zudem sind Verfahren zur Olefinmetathesepolymerisation angegeben.

Eine Verwendung derartiger Katalysatoren für die Peroxidvernetzung von ROMP-Polymeren ist in WO 97/03096 beschrieben.

In der WO 97/06185 sind ebenfalls Metathesekatalysatoren beschrieben, die auf Rutheniummetallcarbenkomplexen beruhen. Sie können neben dem vorstehend beschriebenen Verfahren auch durch Umsetzung von RuCl₂(PPh₃)₃ mit Diazoalkanen hergestellt werden. Der Umgang mit Diazoalkanen stellt jedoch, besonders bei der Durchführung des Verfahrens in technischem Maßstab, ein Sicherheitsrisiko dar.

Zudem müssen die eingesetzten metallorganischen Startmaterialien der Formel RuCl₂(PPh₃)₃ unter Einsatz eines großen Überschußes an Triphenylphosphan aus RuCl₃ 3 H₂O hergestellt werden. Bei der Katalysatorsynthese an sich gehen dann nach Ligandenaustausch nochmals PPh₃-Liganden verloren. Die eingesetzten Carben-Vorläufer erfordern mehrstufige Synthesen und sind nicht unbegrenzt haltbar.

In Organometallics 1996, 15, 1960 bis 1962 ist ein Verfahren zur Herstellung von Rutheniumkomplexen beschrieben, bei dem polymeres [RuCl₂(Cyclooctadien)]ₓ in i-Propanol in Gegenwart von Phosphan mit Wasserstoff umgesetzt wird. Dadurch entfällt die Notwendigkeit des Phosphanaustausches. Es wird ein undefiniertes Gemisch von Produkten erhalten. Zudem sind ausgehend von einem polymeren Startmaterial lange Reaktionszeiten erforderlich. Das im metallorganischen Edukt enthaltene Cyclooctadien trägt nicht zur Reaktion bei und geht verloren.

In J. Chem. Soc. Commun. 1997, 1733 bis 1734 ist eine Synthese des Methylenkomplexes RuCl₂(=CH₂)(PCy₃)₂ beschrieben, die von Dichlormethan und dem Ruthenium-Polyhydrid RuH₂(H₂)₂(PCy₃)₂ ausgeht. Der Ruthenium-Polyhydrid-Komplex ist jedoch schwer zugänglich. Zudem sind lange Reakionszeiten erforderlich.

Die bekannten Synthesewege zur Herstellung von Metathesekatalysatoren des Typs RuX₂(=CH-CH₂R)(PR'₃)₂ sind aus den genannten Gründen unwirtschaftlich.

Aufgabe der vorliegenden Erfindung ist die Bereitstellung von Verfahren zur Herstellung von Ruthenium-Alkylidenkomplexen des Typs RuX₂(=CH-CH₂R)L¹L², beziehungsweise RuXY(=CH-CH₂R)L¹L², die in einer schnellen und atomökonomischen Umsetzung, ausgehend von einfach zugänglichen Ausgangsstoffen, ohne Ligandenaustausch zu den gewünschten Produkten führen. Die Verfahren sollen zudem kostengünstig sein und hohe Ausbeuten unter milden Reaktionsbedingungen liefern.

Die Aufgabe wird erfindungsgemäß gelöst durch ein Verfahren zur Herstellung von Rutheniumkomplexen der allgemeinen Formel I

RuX₂(=CH-CH₂R)L¹L² (I)

in der
- X: ein anionischer Ligand ist,
- R: Wasserstoff oder ein, gegebenenfalls substituierter, C₁₋₂₀-Alkylrest oder C₆₋₂₀-Arylrest ist, und
- L¹ und L²: unabhängig voneinander neutrale Elektronendonor-Liganden sind,
durch
(a) Umsetzung von RuX₃ mit L¹ und L² in einem inerten Lösungsmittel in Gegenwart eines Reduktionsmittels und von Wasserstoff und ohne Isolierung von Zwischenstufen
(b) anschließende Umsetzung mit Verbindungen der allgemeinen Formel II

   R-C≡CH (II)

   in der R die oben angegebene Bedeutung hat, gegebenenfalls in Gegenwart von Wasser.

Die Aufgabe wird zudem gelöst durch ein Verfahren zur Herstellung von Rutheniumkomplexen der allgemeinen Formel IV

RuXY(=CH-CH₂R)L¹L² (IV)

in der
- X, Y: die gleichen oder unterschiedliche anionische Liganden sind,
- R: Wasserstoff oder ein, gegebenenfalls substituierter, C₁₋₂₀-Alkylrest oder C₆₋₂₀-Arylrest ist, und
- L¹ und L²: unabhängig voneinander neutrale Elektronendonor-Liganden sind,
durch
(a) Umsetzung von RuX₃ mit L¹ und L² in einem inerten Lösungsmittel in Gegenwart eines Reduktionsmittels und von Wasserstoff mit Verbindungen der allgemeinen Formel II

   R-C≡CH (II)

   in der R die oben angegebene Bedeutung hat, gegebenenfalls in Gegenwart von Wasser, zu einer Verbindung der allgemeinen Formel V

   RuXH(=C=CHR)L¹L² (V)

   mit den vorstehenden Bedeutungen für X, R, L¹, L²,
(b) Abtrennung der Verbindung der allgemeinen Formel V vom Reaktionsgemisch und anschließende Umsetzung mit HY, (HL¹)Y oder (HL²)Y in einem inerten Lösungsmittel mit Verbindungen der allgemeinen Formel II

   R-C≡CH (II)

   in der R die oben angegebene Bedeutung hat, gegebenenfalls in Gegenwart von Wasser,
(c) anschließende Umsetzung mit HY, [HL¹]Y oder [HL²]Y.

Es wurde gefunden, daß die vorstehenden Rutheniumkomplexe direkt aus RuX₃, vorzugsweise RuCl₃·3(H₂O)durch einfache Reaktion mit Liganden L¹ und L², Wasserstoff und terminalen Alkinen der allgemeinen Formel II in Gegenwart von Reduktionsmitteln ohne Isolierung von Zwischenstufen in sehr guten Ausbeuten erhalten werden können. Die Rutheniumkomplexe enthalten dabei keine vinylischen Substituenten am Carbenkohlenstoffatom. Die Ausgangsstoffe sind kostengünstig herstellbar und leicht verfügbar.

Zur Herstellung der gemischt-anionischen Komplexe der allgemeinen Formel IV wird die Zwischenstufe der allgemeinen Formel V gewonnen beziehungsweise isoliert und anschließend weiter umgesetzt. Dadurch können unterschiedliche Liganden X und Y eingebracht werden.

Zunächst erfolgt die Umsetzung von RuX₃ mit den Liganden L¹ und L² in einem inerten Lösungsmittel in Gegenwart eines Reduktionsmittels und von Wasserstoff. Als Lösungsmittel können dabei Aromaten, Heteroaromaten, cyclische oder acyclische Ether eingesetzt werden. Bevorzugte Lösungsmittel sind Toluol, NMP, Tetrahydrofuran, Dialkylether, Glykolether und Dioxan. Besonders bevorzugt ist Tetrahydrofuran.

Als Reduktionsmittel kann jedes Reduktionsmittel eingesetzt werden, das unter den Reaktionsbedingungen Ru(III) zu Ru(II) reduziert. Vorzugsweise wird die Reduktion mit Wasserstoff in Gegenwart eines metallischen oder nichtmetallischen Reduktionsmittels, bevorzugt in Gegenwart eines Alkalimetalls, Erdalkalimetalls oder Übergangsmetalls, wie Palladium oder Zink, das in metallischer Form vorliegt und/oder auf einen Träger aufgebracht sein kann, durchgeführt. Die Erdalkalimetalle, vorzugsweise Magnesium, werden vorzugsweise in einer aktivierten Form eingesetzt. Dabei kann die Aktivierung beispielsweise durch Kontaktieren mit einem chlorhaltigen organischen Lösungsmittel erhalten werden. Beispielsweise kann in einer Eintopfreaktion unter Inertgasatmosphäre Magnesium in einem verdünnten chlorhaltigen organischen Lösungsmittel, beispielsweise Dichlorethan, vorgelegt und nach einer Induktionsperiode von einer Sekunde bis 10 Stunden, vorzugsweise einer Minute bis einer Stunde mit dem Lösungsmittel, RuX₃ und den Liganden L¹ und L² unter einer Wasserstoffatmosphäre umgesetzt werden. Dabei beträgt die Temperatur in diesem Umsetzungsschritt (a) vorzugsweise 0 bis 100°C, besonders bevorzugt 20 bis 80 °C, insbesondere 40 bis 60°C. Der Druck beträgt dabei vorzugsweise 0,1 bis 100 bar, besonders bevorzugt 0,5 bis 5 bar, insbesondere 0,8 bis 1,5 bar. Die Umsetztung erfolgt für einen Zeitraum von vorzugsweise 10 Minuten bis 100 Stunden, besonders bevorzugt eine Stunde bis 10 Stunden. Das Molverhältnis von Liganden L¹ und L² zusammengenommen zum eingesetzten Rutheniumsalz beträgt vorzugsweise 2 bis 20 : 1, besonders bevorzugt 2 bis 5 : 1. Nach der Umsetzung im Schritt (a) wird das Reaktionsgemisch vorzugsweise bei einer Temperatur im Bereich von -80 bis 100°C, besonders bevorzugt -40 bis 50°C, insbesondere -30 bis 20°C mit einem 1-Alkin umgesetzt. Dabei beträgt das molare Verhältnis von ursprünglich eingesetztem Rutheniumsalz zu 1-Alkin vorzugsweise 1 : 1 bis 1 : 10. Die Umsetzung erfolgt vorzugsweise bei einem Druck von 0,1 bis 10 bar, besonders bevorzugt 0,8 bis 1,5 bar, insbesondere 1 bis 1,4 bar für einen Zeitraum von vorzugsweise 30 Sekunden bis 10 Stunden, besonders bevorzugt eine Minute bis eine Stunde.

Zur Herstellung der Komplexe der allgemeinen Formel I ist keine Isolierung des Zwischenproduktes V erforderlich, jedoch möglich. Die weitere Umsetzung erfolgt in Schritt (b) vorzugsweise in Gegenwart von Wasser.

Zur Herstellung der gemischt-anionischen Komplexe der allgemeinen Formel IV wird das Zwischenprodukt vor der Umsetzung in Schritt (c) d.h. der Umsetzung mit HY, [HL¹]Y oder [HL²]Y, vorzugsweise HY isoliert.

Die Umsetzung ist meistens nach 1 bis 100 Stunden, vorzugsweise 3 bis 10 Stunden beendet und liefert Metathesekatalysatoren in Ausbeuten von bis zu 95%, bezogen auf das eingesetzte Rutheniumsalz. Als Reaktoren eignen sich allgemein Glas- oder Stahlbehälter, welche gegebenenfalls druckstabil sein müssen.

Die Aufarbeitung des erhaltenen Reaktionsgemisches erfolgt vorzugsweise durch Entfernen flüchtiger Bestandteile unter vermindertem Druck und Extrahieren des festen Rückstandes mit Hilfe eines organischen Lösungsmittels wie Pentan.

In den Rutheniumkomplexen der allgemeinen Formeln I und IV ist X ein einzähniger anionischer Ligand, beispielsweise Halogen, Pseudohalogen, Carboxylat. Diketonat. Besonders bevorzugt bedeutet X Halogen, insbesondere Brom oder Chlor, speziell Chlor. Besonders bevorzugt wird bei der Umsetzung RuCl₃·3H₂O eingesetzt.

In den Rutheniumkomplexen der allgemeinen Formel IV kann Y der gleiche Ligand wie X sein. Vorzugsweise ist er ein von X verschiedenes Halogen oder ein an ein Polymer oder einen Träger gebundenes Carboxyl, mit dem eine Träger-Fixierung des Katalysators möglich ist. Bei den Zwischenprodukten der allgemeinen Formel V kann auch ein Austausch des Liganden X durch Salzmetathese mit MY erfolgen, wobei M Alkalimetall oder Ammonium, vorzugsweise Kalium bedeutet. Auf diese Weise sind auch Produktgemische zugänglich.

L¹ und L² sind neutrale Elektronendonor-Liganden. Beispiele hierfür sind Amine, Phosphane, Arsane und Stibane, vorzugsweise Phosphane vorzugsweise sind L¹ und L² ausgewählt aus Phosphanen der allgemeinen Formel III

PR¹R²R³ (III)

in der R¹ und R² unabhängig Phenylreste oder organische sterisch hindernde Reste sind und R³ Wasserstoff, ein gegebenenfalls substituierter, C₁₋₂₀-Alkylrest oder C₆₋₂₀-Arylrest oder wie für R¹ definiert ist. Unter "sterisch hindernder Rest" werden solche Reste verstanden, die eine räumlich anspruchsvolle Struktur aufweisen. Beispiele derartiger Reste sind i-Propyl, tert.-Butyl, Cyclopentyl, Cyclohexyl, Phenyl oder Menthyl. Vorzugsweise wird ein Cyclohexylrest als sterisch hindernder Rest eingesetzt. Besonders bevorzugt sind alle drei Reste R¹, R² und R³ sterisch hindernde Reste oder Phenylreste, insbesondere Cyclohexylreste. Die Reste R¹, R² und R³ können jeweils geeignete Substituenten tragen. Beispiele derartiger Substituenten sind C₁₋₆-Alkylreste, vorzugsweise C₁₋₃-Alkylreste, C₁₋₃-Fluoralkylreste, Halogenatome, Nitrogruppen, Aminogruppen, Ester- und Säurefunktionen, -OH, C₁₋₆-Alkoxygruppen oder Sulfonatgruppen. Vorzugsweise sind die Reste nicht substituiert.

Der Rest R ist Wasserstoff oder ein, gegebenenfalls substituierter, C₁₋₂₀-, vorzugsweise C₁₋₆-Alkylrest oder C₆₋₂₀-, vorzugsweise C₆₋₈-Arylrest. Für die Substituenten gilt das vorstehend Gesagte. Besonders bevorzugt sind als Rutheniumkomplex der allgemeinen Formel I die Komplexe RuCl₂(=CH-CH₃)(PCy₃)₂ und RuCl₂(=CH-CH₂-Ph)(PCy₃)₂ wobei Cy einen Cyclohexylrest und Ph einen Phenylrest bedeuten.

Die erfindungsgemäß hergestellten Rutheniumkomplexe können als Methathesekatalysatoren eingesetzt werden.
Die Erfindung wird nachstehend anhand von Beispielen näher erläutert.

### Beispiel 1

Synthese des Ethyliden-Komplexes RuCl₂(=CH-CH₃)(PCy₃)₂ aus RuCl₃ 3 H₂O und Acetylen.

50 mmol aktiviertes Magnesium wurden in 20 ml abs. THF vorgelegt. Nach Zugabe von 8 mmol RuCl₃ 3 H₂O, 31 mmol Tricyclohexylphosphan und 80 ml THF wurde die Reaktionsmischung unter 1 bar Wasserstoffatmosphäre fiir 6,5 Stunden bei 60°C gerührt. Nach Abkühlung der Reaktionsmischung auf -30°C wurde für etwa 10 Sekunden Acetylen eingeleitet und 5 Minuten nachgerührt. Anschließend wurde die Reaktionsmischung mit 0,5 ml Wasser versetzt, auf Raumtemperatur erwärmt, das Lösungsmittel bei vermindertem Druck entfernt, der feste Rückstand in eine Extraktionshülse überführt und mit 20 ml Pentan in einem Soxhlett-Extraktor extrahiert. Die isolierte Ausbeute an analysenreinem rotviolettem Feststoff betrug 5.3 g (88% der Theorie).

### Beispiel 2

Synthese des Komplexes RuCl₂(=CH-CH₂-Ph)(PCy₃)₂ aus RuCl₃·3H₂O und Phenylacetylen.

50 mmol aktiviertes Magnesium wurden in 25 ml abs. THF vorgelegt. Nach Zugabe von 1,9 mmol RuCl₃·3H₂O 8 mmol Tricyclohexylphosphan und 0,5 ml ClCH₂CH₂Cl wurde die Reaktionsmischung unter 1 bar Wasserstoffatmosphäre für 6,5 Stunden bei 60°C gerührt. Nach der Reduktion wurde das Reaktionsgemisch auf -40°C gekühlt und tropfenweise mit 1,9 mmol Phenylacetylen versetzt, wobei eine heftige Gasentwicklung eintrat. Nach 20 min Rühren bei -40°C wurde die Kühlung entfernt, und bei ca. 0°C wurden 7 mmol Wasser zugegeben. Nach Erwärmen auf Raumtemperatur wurde noch 10 min gerührt, anschließend das Solvens im Vakuum entfernt und der Rückstand mit 60 ml Toluol extrahiert. Der Extrakt wurde zur Trockne eingeengt, der verbleibende purpurfarbene Feststoff nacheinander viermal mit jeweils 10 ml Pentan und zweimal mit je 40 ml Methanol gewaschen und im Vakuum getrocknet. Die isolierte Ausbeute an analysenreinem purpurfarbenem Feststoff betrug 1,2 g (76 % der Theorie).

## Patentansprüche

1. Verfahren zur Herstellung von Rutheniumkomplexen der allgemeinen Formel I
RuX₂(=CH-CH₂R)L¹L² (I)
in der
X ein anionischer Ligand ist,
R Wasserstoff oder ein, gegebenenfalls substituierter, C₁₋₂₀-Alkylrest oder C₆₋₂₀-Arylrest ist, und
L¹ und L² unabhängig voneinander neutrale Elektronendonor-Liganden sind,
durch
(a) Umsetzung von RuX₃ mit L¹ und L² in einem inerten Lösungsmittel in Gegenwart eines Reduktionsmittels und von Wasserstoff und ohne Isolierung von Zwischenstufen
(b) anschließende Umsetzung mit Verbindungen der allgemeinen Formel II
R-C≡CH (II)
in der R die oben angegebene Bedeutung hat, gegebenenfalls in Gegenwart von Wasser.

2. Verfahren zur Herstellung von Rutheniumkomplexen der allgemeinen Formel IV
RuXY(=CH-CH₂R)L¹L² (IV)
in der
X, Y die gleichen oder unterschiedliche anionische Liganden sind,
R Wasserstoff oder ein, gegebenenfalls substituierter, C₁₋₂₀-Alkylrest oder C₆₋₂₀-Arylrest ist, und
L¹ und L² unabhängig voneinander neutrale Elektronendonor-Liganden sind, durch
(a) Umsetzung von RuX₃ mit L¹ und L² in einem inerten Lösungsmittel in Gegenwart eines Reduktionsmittels und von Wasserstoff mit Verbindungen der allgemeinen Formel II
R-C≡CH (II)
in der R die oben angegebene Bedeutung hat, gegebenenfalls in Gegenwart von Wasser,
zu einer Verbindung der allgemeinen Formel V
RuXH(=C=CHR)L¹L² (V)
mit den vorstehenden Bedeutungen für X, R, L¹, L²,
(b) Abtrennung der Verbindung der allgemeinen Formel V vom Reaktionsgemisch und anschließende Umsetzung mit HY, (HL¹)Y oder (HL²)Y in einem inerten Lösungsmittel mit Verbindungen der allgemeinen Formel II
R-C≡CH (II)
in der R die oben angegebene Bedeutung hat, gegebenenfalls in Gegenwart von Wasser,
(c) anschließende Umsetzung mit HY, [HL¹]Y oder [HL²]Y.

3. Verfahren nach Anspruch 1 oder 2, **dadurch gekennzeichnet, daß** L¹ und L² ausgewählt sind aus Phosphanen der allgemeinen Formel III
PR¹R²R³ (III)
in der R¹ und R² unabgängig voneinander Phenylreste oder organische sterisch hindernde Reste sind und R³ Wasserstoff, ein gegebenenfalls substituierter, C₁₋₁₂-Alkylrest oder C₆₋₂₀-Arylrest oder wie für R¹ definiert ist.

4. Verfahren nach Anspruch 3, **dadurch gekennzeichnet, daß** R¹ und R² ausgewählt sind aus i-Propyl, tert.-Butyl, Cyclopentyl, Cyclohexyl, Phenyl oder Menthyl.

5. Verfahren nach einem der Ansprüche 1 bis 4, **dadurch gekennzeichnet, daß** X Halogen und Y das gleiche oder unterschiedliches Halogen oder ein an ein Polymer oder einen Träger gebundenes Carboxyl bedeuten.

6. Verfahren nach Anspruch 1 bis 5, **dadurch gekennzeichnet, daß** die Reduktion mit Wasserstoff in Gegenwart eines metallischen oder nichtmetallischen Reduktionsmittels durchgeführt wird.

7. Verfahren nach Anspruch 6, **dadurch gekennzeichnet, daß** als Reduktionsmittel Magnesium eingesetzt wird, das durch Kontaktieren mit einem chlorhaltigen organischen Lösungsmittel aktiviert wird.

8. Verfahren nach einem der Ansprüche 1 bis 7, **dadurch gekennzeichnet, daß** die Umsetzung in Schritt (a) bei einem Druck im Bereich von 0,1 bis 100 bar und in Schritt (b) bei einem Druck im Bereich von 0,1 bis 10 bar durchgeführt wird.

9. Verfahren nach einem der Ansprüche 1 bis 8, **dadurch gekennzeichnet, daß** die Umsetzung in Schritt (a) bei einer Temperatur im Bereich von 0 bis 100°C und in Schritt (b) bei einer Temperatur im Bereich von -80 bis 100°C durchgeführt wird.

10. Verfahren nach einem der Ansprüche 1 bis 9, **dadurch gekennzeichnet, daß** das Lösungsmittel ausgewählt ist aus Aromaten, Heteroaromaten, cyclischen oder acyclischen Ethern.

11. Verfahren nach einem der Ansprüche 1 bis 10, **dadurch gekennzeichnet, daß** die Rutheniumkomplexe der allgemeinen Formeln I oder IV nach dem Entfernen flüchtiger Bestandteile aus dem Reaktionsgemisch durch Extraktion mit einem organischen Lösungsmittel analysenrein gewonnen werden.

## Claims

1. A process for preparing ruthenium complexes of the formula I
RuX₂(=CH-CH₂R)L¹L² (I)
where
X is an anionic ligand,
R is hydrogen or a substituted or unsubstituted C₁-C₂₀-alkyl radical or C₆-C₂₀-aryl radical and
L¹ and L² are, independently of one another, uncharged electron donor ligands,
by
(a) reaction of RuX₃ with L¹ and L² in an inert solvent in the presence of a reducing agent and hydrogen and, without isolation of intermediates,
(b) subsequent reaction with compounds of the formula II
R-C≡CH (II)
where R is as defined above, in the presence or absence of water.

2. A process for preparing ruthenium complexes of the formula IV
RuXY(=CH-CH₂R)L¹L² (IV)
where
X, Y are identical or different anionic ligands,
R is hydrogen or a substituted or unsubstituted C₁-C₂₀-alkyl radical or C₆-C₂₀-aryl radical and
L¹ and L² are, independently of one another, uncharged electron donor ligands,
by
(a) reaction of RuX₃ with L¹ and L² in an inert solvent in the presence of a reducing agent and hydrogen with compounds of the formula II
R-C≡CH (II)
where R is as defined above, in the presence or absence of water,
to form a compound of the formula V
RuXH(=C=CHR)L¹L² (V)
where X, R, L¹, L² are as defined above,
(b) separation of the compound of the formula V from the reaction mixture and subsequent reaction with HY, (HL¹)Y or (HL²)Y in an inert solvent with compounds of the formula II
R-C≡CH (II)
where R is as defined above, in the presence or absence of water, and
(c) subsequent reaction with HY, [HL¹]Y or [HL²]Y.

3. A process as claimed in claim 1 or 2, wherein L¹ and L² are selected from among phosphines of the formula III
PR¹R²R³ (III)
where R¹ and R² are, independently of one another, phenyl radicals or organic, sterically hindered radicals and R³ is hydrogen, a substituted or unsubstituted C₁-C₁₂-alkyl radical or C₆-C₂₀-aryl radical or is as defined for R¹.

4. A process as claimed in claim 3, wherein R¹ and R² are selected from among i-propyl, tert-butyl, cyclopentyl, cyclohexyl, phenyl or menthyl.

5. A process as claimed in any of claims 1 to 4, wherein X is halogen and Y is the same or different halogen or is a carboxyl group which is bound to a polymer or a support.

6. A process as claimed in any of claims 1 to 5, wherein the reduction with hydrogen is carried out in the presence of a metallic or nonmetallic reducing agent.

7. A process as claimed in claim 6, wherein the reducing agent used is magnesium which is activated by contacting with a chlorine-containing organic solvent.

8. A process as claimed in any of claims 1 to 7, wherein the reaction in step (a) is carried out at a pressure in the range from 0.1 to 100 bar and that in step (b) is carried out at a pressure in the range from 0.1 to 10 bar.

9. A process as claimed in any of claims 1 to 8, wherein the reaction in step (a) is carried out at from 0 to 100°C and that in step (b) is carried out at from -80 to 100°C.

10. A process as claimed in any of claims 1 to 9, wherein the solvent is selected from aromatics, heteroaromatics, cyclic or acyclic ethers.

11. A process as claimed in any of claims 1 to 10, wherein the ruthenium complexes of the formula I or IV are, after removal of volatile constituents from the reaction mixture, isolated in analytically pure form by extraction with an organic solvent.

## Revendications

1. Procédé pour la préparation de complexes de ruthénium répondant à la formule générale I
RuX₂(=CH-CH₂R)L¹ L² (I)
dans laquelle
X représente un ligand anionique,
R représente un atome d'hydrogène ou encore un radical alkyle en C₁-C₂₀ ou un radical aryle en C₆-C₂₀, le cas échéant substitué, et
L¹ et L² représentent, indépendamment l'un de l'autre, des ligands neutres donneurs d'électrons,
par
(a) mise en réaction de RuX₃ avec L¹ et L² dans un solvant inerte en présence d'un agent de réduction et d'hydrogène et sans isolation des produits intermédiaires,
(b) mise en réaction ultérieure avec des composés répondant à la formule générale II
R-C≡CH (II)
dans laquelle R a la signification indiquée ci-dessus, le cas échéant en présence d'eau.

2. Procédé pour la préparation de complexes de ruthénium répondant à la formule générale IV
RuXY(=CH-CH₂R)L¹L² (IV)
dans laquelle
X, Y représentent des ligands anioniques identiques ou différents,
R représente un atome d'hydrogène ou encore un radical alkyle en C₁-C₂₀ ou un radical aryle en C₆-C₂₀, le cas échéant substitué, et
L¹ et L² représentent, indépendamment l'un de l'autre, des ligands neutres donneurs d'électrons,
par
(a) mise en réaction de RuX₃ avec L¹ et L² dans un solvant inerte en présence d'un agent de réduction et d'hydrogène avec des composés répondant à la formule générale II
R-C≡CH (II)
dans laquelle R a la signification indiquée ci-dessus, le cas échéant en présence d'eau,
pour obtenir un composé répondant à la formule générale V
RuXH(=CH=CHR)L¹L² (V)
dans laquelle X, R, L¹ et L² ont les significations indiquées ci-dessus,
(b) séparation du mélange réactionnel du composé répondant à la formule générale V et mise en réaction ultérieure avec HY, (HL¹)Y ou (HL²)Y dans un solvant inerte avec des composés répondant à la formule générale II
R-C≡CH (II)
dans laquelle R a la signification indiquée ci-dessus, le cas échéant en présence d'eau,
(c) mise en réaction ultérieure avec HY, [HL¹]Y ou [HL²]Y.

3. Procédé selon la revendication 1 ou 2, **caractérisé en ce que** L¹ et L² sont choisis parmi des phosphanes répondant à la formule générale III
PR¹R²R³ (III)
dans laquelle R¹ et R² représentent, indépendamment l'un de l'autre, des radicaux phényle ou des radicaux organiques à empêchement stérique et R³ représente un atome d'hydrogène, un radical alkyle en C₁-C₁₂ ou un radical aryle en C₆-C₂₀, le cas échéant substitué ou encore possèdent la même définition que celle de R¹.

4. Procédé selon la revendication 3, **caractérisé en ce que** R¹ et R² sont choisis parmi le groupe comprenant un groupe isopropyle, un groupe tert.-butyle, un groupe cyclopentyle, un groupe cyclohexyle, un groupe phényle ou un groupe menthyle.

5. Procédé selon l'une quelconque des revendications 1 à 4, **caractérisé en ce que** X représente un atome d'halogène et Y représente le même atome d'halogène ou un atome d'halogène différent ou encore un groupe carboxyle lié à un polymère ou à un support.

6. Procédé selon l'une quelconque des revendications 1 à 5, **caractérisé en ce qu'**on effectue la réduction avec de l'hydrogène en présence d'un agent de réduction métallique ou non métallique.

7. Procédé selon la revendication 6, **caractérisé en ce qu'**on met en oeuvre, à titre d'agent de réduction, du magnésium que l'on active par mise en contact avec un solvant organique chloré.

8. Procédé selon l'une quelconque des revendications 1 à 7, **caractérisé en ce qu'**on effectue la mise en réaction à l'étape (a) sous une pression dans la plage de 0,1 à 100 bar et à l'étape (b) sous une pression dans la plage de 0,1 à 10 bar.

9. Procédé selon l'une quelconque des revendications 1 à 8, **caractérisé en ce qu'**on effectue la mise en réaction à l'étape (a) à une température dans la plage de 0 à 100 °C et à l'étape (b) à une température dans la plage de -80 à 100 °C.

10. Procédé selon l'une quelconque des revendications 1 à 9, **caractérisé en ce que** le solvant est choisi parmi le groupe comprenant des composés aromatiques, des composés hétéroaromatiques, des éthers cycliques ou acycliques.

11. Procédé selon l'une quelconque des revendications 1 à 10, **caractérisé en ce qu'**on obtient les complexes de ruthénium répondant aux formules générales I ou IV sous une forme analytiquement pure après élimination des constituants volatils du mélange réactionnel par extraction dans un solvant organique.
